**Europäisches Patentamt**

**European Patent Office**

**Office européen des brevets**

(19)

(11) Numéro de publication: **0 247 932**
**B1**

(12) **FASCICULE DE BREVET EUROPEEN**

(45) Date de publication du fascicule du brevet:
21.03.90

(21) Numéro de dépôt: 87401158.8

(22) Date de dépôt: 22.05.87

(51) Int. Cl.⁴: **A47J 36/02, B21D 51/22,**
**B44C 1/04, B05D 3/12,**
**B05D 5/06, B05D 5/08**

(54) Récipient notamment à usage culinaire obtenu par emboutissage d'un disque métallique presentant un décor.

(30) Priorité: 28.05.86 FR 8607628

(43) Date de publication de la demande:
02.12.87 Bulletin 87/49

(45) Mention de la délivrance du brevet:
21.03.90 Bulletin 90/12

(84) Etats contractants désignés:
DE ES GB IT

(56) Documents cités:
DE-A- 2 520 512
FR-A- 1 477 037
FR-A- 2 567 778
FR-A- 2 576 253

(73) Titulaire: SEB S.A., F-21260 Selongey(FR)

(72) Inventeur: Berthet, Daniel, Verlioz Haut Vallieres,
F-74150 Rumilly(FR)

(74) Mandataire: Bouju, André, Cabinet Bouju 38 avenue de
la Grande Armée, F-75017 Paris(FR)

ACTORUM AG

## Description

La présente invention concerne un récipient notamment à usage culinaire tel que casserole, poêle, sauteuse et analogue obtenu par emboutissage d'un disque métallique revêtu sur ces deux faces par un revêtement anti-adhésif tel que du polytétrafluoréthylène.

On connaît les avantages techniques apportés par les récipients culinaires revêtus intérieurement et extérieurement par un revêtement anti-adhésif.

On sait qu'il est avantageux de pouvoir appliquer ce revêtement anti-adhésif sur les deux faces du disque métallique avant emboutissage de celui-ci sous la forme d'un récipient.

En effet, il est beaucoup plus facile d'appliquer le revêtment anti-adhésif sur un disque plan que sur le récipient embouti.

Par ailleurs, l'application du revêtement anti-adhésif sur les deux faces du disque facilite considérablement l'emboutissage.

De plus, cet emboutissage exerce une pression sur le revêtement anti-adhésif qui a pour effet d'améliorer l'ancrage de celui-ci sur le disque métallique.

La demanderesse a décrit dans sa demande de brevet français n° 85 00896 du 23 janvier 1985 un procédé qui permet de réaliser par sérigraphie un décor sur un revêtement de résine fluoro-carbonée telle que le polytétrafluoréthylène.

La demanderesse a constaté qu'un tel décor pouvait être réalisé directement sur le disque revêtu sur ses deux faces par un revêtement anti-adhésif et qu'un tel décor était compatible avec l'emboutissage ultérieur du disque sous forme de récipient.

Toutefois la mise en place d'un décor sur un disque à emboutir soulève la difficulté suivante :

Lors de l'emboutissage, le disque subit dans la zone correspondant à la paroi latérale du récipient à emboutir, un allongement radial et en même temps une contraction circonférentielle.

Par conséquent, si l'on applique dans cette zone du disque des motifs de décor régulièrement répartis, on constate, qu'après l'emboutissage du disque, la répartition des motifs est complètement déformée du fait de l'allongement radial et de la contraction circonférentielle subis par le disque métallique.

Ainsi, si par exemple le décor est constitué par des cercles concentriques, ceux-ci deviennent sur l'article embouti des lignes ondulées d'aspect inesthétique.

Par ailleurs, les disques sont découpés dans des tôles ayant subi des laminages dans des directions déterminées de sorte que la déformabilité des disques est plus importante dans certaines directions que dans d'autres, ce qui contribue également à déformer considérablement la répartition des motifs d'un décor sur la face latérale extérieure d'un récipient.

Si l'on pouvait prévoir les déformations subies par un disque métallique, il serait possible de s'affanchir des problèmes précités, en créant sur le disque un motif dont la répartition est initialement déformée, mais d'une manière prédéterminée, de sorte que cette répartition devienne régulière sur le récipient embouti.

Toutefois, ceci est dans la pratique impossible à réaliser, car les déformations subies par le disque métallique sont imprévisibles et incontrôlables lors de l'emboutissage.

Le but de la présente invention est de remédier aux inconvénients précités en créant sur un disque destiné à être embouti un décor tel que celui-ci puisse subir des déformations normales qui soient pratiquement invisibles sur le récipient embouti.

L'invention vise un récipient, notamment à usage culinaire, obtenu par emboutissage d'un disque métallique revêtu sur ses deux faces par un revêtement anti-adhésif, au moins la partie périphérique de ce disque correspondant à la face latérale extérieure du récipient comportant un décor formé sur le revêtement anti-adhésif.

Suivant l'invention, ce récipient est caractérisé en ce que le décor est constitué par des motifs s'étendant suivant des directions radiales du disque métallique d'emboutissage.

Grâce à cette répartition des motifs suivant des directions radiales, les déformations subies par le disque lors de son emboutissage n'entraînent aucune modification visible dans la répartition des motifs du décor sur la face latérale extérieure du récipient embouti.

Selon une version préférée de l'invention, les motifs sont séparés les uns des autres et présentent une longueur dans la direction radiale nettement plus grande que leur largeur.

En raison de la largeur relativement faible de ces motifs, on peut difficilement discerner qu'un motif a été davantage déformé qu'un autre ou qu'un motif a été déplacé par rapport à un autre lors de l'emboutissage.

Ces motifs peuvent être constitués par des traits discontinus. De préférence, les motifs situés selon une direction radiale donnée sont disposés en quinconce par rapport aux motifs situés sur les directions radiales adjacentes.

Dans ces conditions, ces traits discontinus apparaissent avec une disposition régulière sur le récipient embouti, malgré les déformations subies par le disque lors de l'emboutissage.

D'autres particularités et avantages de l'invention apparaîtront encore dans la description ci-après.

Aux dessins annexés donnés à titre d'exemples non limitatifs :

- la figure 1 est une vue en plan d'un disque comportant un motif de décoration ;
- la figure 2 est une vue en coupe axiale du disque embouti entre une matrice et un poinçon ;
- la figure 3 est une vue à grande échelle du détail A de la figure 2 ;
- la figure 4 est une vue en élévation du récipient embouti ;
- la figure 5 est une vue en plan d'un disque comportant un autre motif de décoration ;
- la figure 6 est une vue en élévation du récipient embouti à partir du disque représenté sur la figure 5.

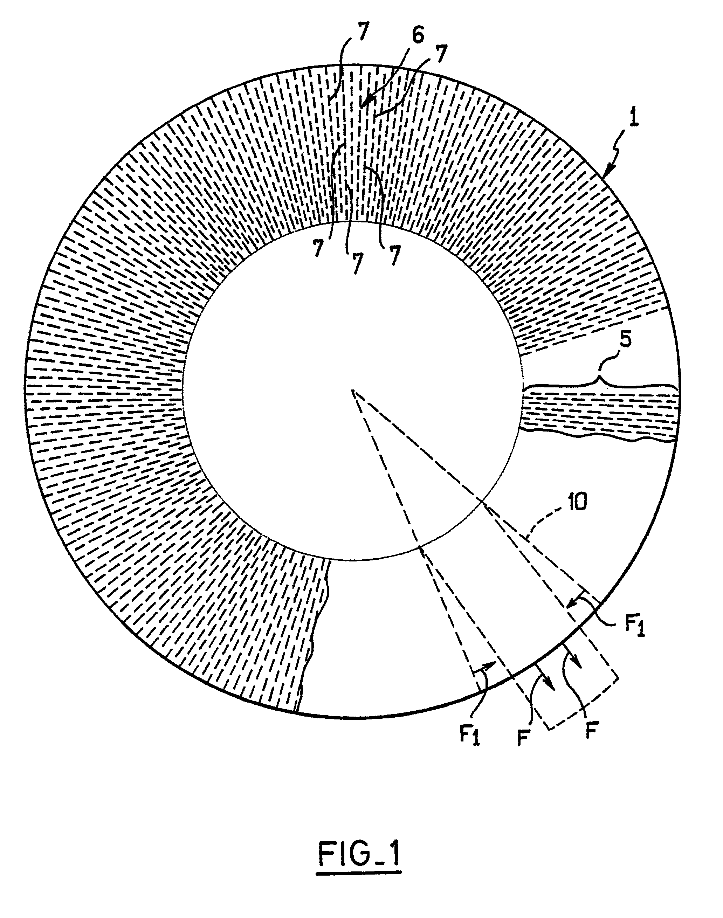

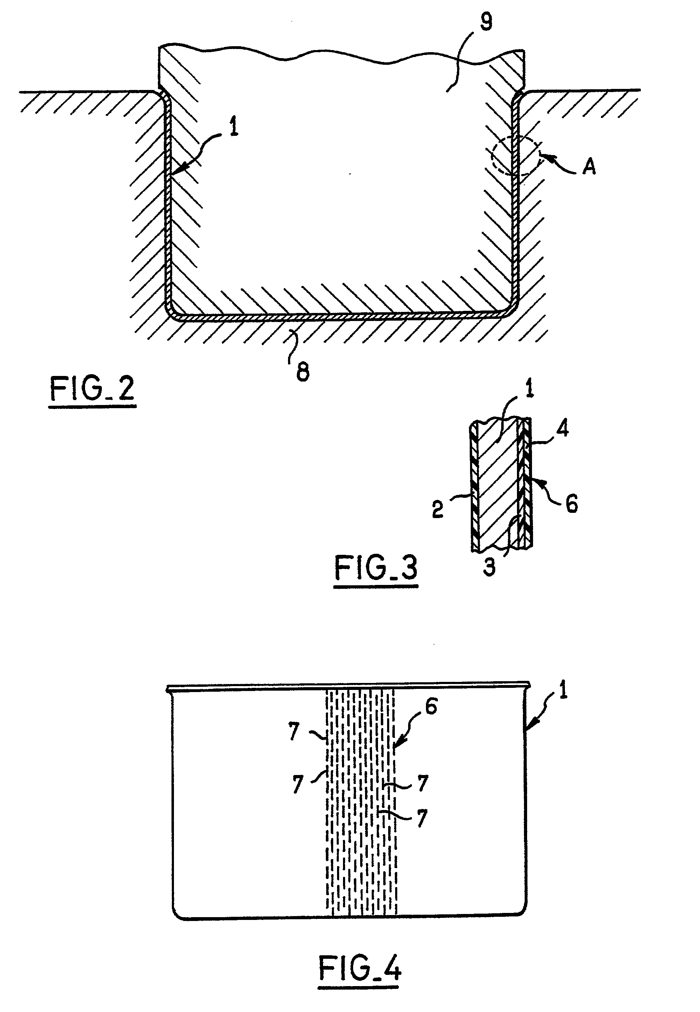

Sur la figure 1, on a représenté un disque 1, par exemple en aluminium revêtu sur ses deux faces par un revêtement anti-adhésif 2, 3, 4 (voir figure 3) par exemple en polytétrafluoréthylène.

La partie périphérique 5 de ce disque 1 qui correspond à la face latérale extérieure du récipient à emboutir comporte un décor 6.

Ce décor 6 est formé dans la couche extérieure 4 de revêtement anti-adhésif, par exemple selon le procédé décrit dans la demande de brevet français n° 85 00896 du 23 janvier 1985 de la demanderesse.

Conformément à l'invention, le décor 6 est formé par des motifs 7 s'étendant suivant des directions radiales.

Ces motifs 7 sont séparés les uns des autres et présentent une longueur dans la direction radiale nettement plus grande que leur largeur.

Dans l'exemple représenté sur la figure 1, les motifs 7 sont constitués par des traits discontinus.

De plus, les motifs 7 situés suivant une direction radiale donnée sont disposés en quinconce par rapport aux motifs 7 situés sur les directions radiales adjacentes.

Après avoir appliqué le décor 6 sur les faces des disques 1 revêtues d'anti-adhésif, ce disque est embouti sous la forme d'une casserole ou tout autre récipient, entre une matrice 8 et un poinçon 9, comme indiqué sur la figure 2.

Lors de cet emboutissage, le disque 1 subit dans un secteur angulaire déterminé représenté en pointillé et désigné par le repère 10 sur la figure 1, des déformations radiales F et des déformations circonférentielles F1. Comme indiqué sur la figure 1, les déformations radiales F allongent le disque dans les directions radiales, tandis que les déformations circonférentielles F1 compriment le disque dans le sens de la circonférence.

On comprend dès lors que ces déformations modifient la position et la répartition initiale des motifs 7 du décor 6.

Compte tenu de la disposition radiale des motifs 7 et également du fait que ceux-ci dans l'exemple représenté sont constitués par des traits discontinus, disposés en quinconce par rapport aux motifs situés sur les directions adjacentes, il est pratiquement impossible de discerner sur la face externe du récipient embouti (voir figure 4), les effets dus aux déformations précitées sur la répartition et la position des motifs 7.

En effet, ces motifs 7 apparaissent comme étant régulièrement disposés. En particulier, l'absence de lignes concentriques dans le décor empêche de voir les ondulations de cette ligne engendrées par les déformations.

De même, du fait que les motifs 7 soient disposés en quinconce empêche de voir que les motifs adjacents situés suivant un cercle concentrique à l'axe du récipient se situent en fait sur un cercle déformé.

En comparant les figures 1 et 4, on s'aperçoit seulement que les directions radiales formées par les motifs 7 sont devenues sensiblement parallèles sur la face latérale extérieure du récipient, en raison de la contraction circonférentielle F1.

Par contre, les déformations radiales F qui varient tout autour du disque 1 n'ont pas affecté l'aspect du décor 6.

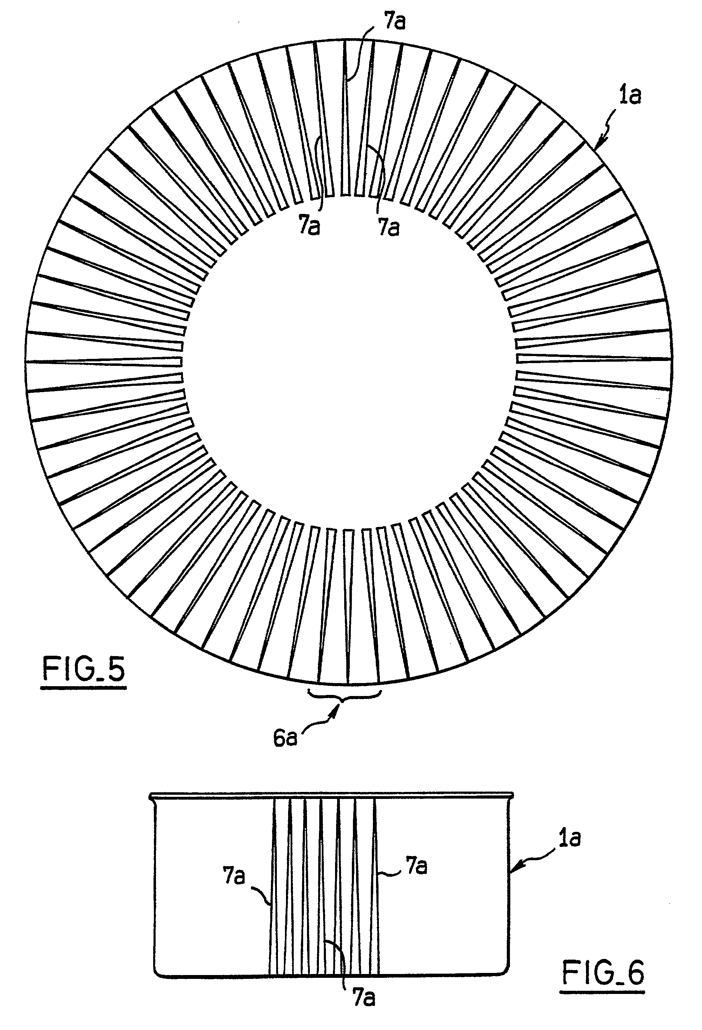

Dans la variante représentée sur la figure 5, les motifs du décor 6a réalisés sur le disque 1a sont constitués par des traits radiaux continus 7a.

Dans cet exemple, ces traits radiaux 7a présentent une épaisseur qui croît progressivement de l'extérieur du disque vers le centre de celui-ci.

Dans cet exemple, les déformations radiales et circonférentielles subies par le disque 1a lors de son emboutissage n'affecte pas l'aspect du décor constitué par les motifs 7a, comme on le voit sur la figure 6. La seule différence visible est que les traits radiaux 7a réalisés sur le disque 1a sont devenus sensiblement parallèles sur le récipient final.

Bien entendu, l'invention n'est pas limitée aux exemples de réalisation que l'on vient de décrire et on peut apporter à ceux-ci de nombreuses modifications sans sortir du cadre de l'invention.

Ainsi, on peut alterner sur un même disque des motifs discontinus tels que les motifs 7 avec des motifs continus tels que les motifs 7a.

Par ailleurs, les traits discontinus 7 peuvent être remplacés par d'autres motifs pourvu que ceux-ci soient allongés dans la direction radiale.

## Revendications

1. Récipient notamment à usage culinaire obtenu par emboutissage d'un disque métallique (1, 1a) revêtu sur ses deux faces par un revêtement anti-adhésif (2, 3, 4), au moins la partie péripherique de ce disque correspondant à la face latérale extérieure du récipient comportant un décor (6, 6a) formé dans le revêtement anti-adhésif, caractérisé en ce que ce décor est constitué par des motifs (7, 7a) s'étendant suivant des directions radiales du disque métallique d'emboutissage (1, 1a).

2. Récipient conforme à la revendication 1, caractérisé en ce que les motifs (7) sont séparés les uns des autres et présentent une longueur dans la direction radiale nettement plus grande que leur largeur.

3. Récipient conforme à la revendication 2, caractérisé en ce que les motifs (7) sont constitués par des traits discontinus.

4. Récipient conforme à l'une des revendications 2 ou 3, caractérisé en ce que les motifs (7) situés suivant une direction radiale donnée sont disposés en quinconce par rapport aux motifs situés sur les directions radiales adjacentes.

5. Récipient conforme à la revendication 1, caractérisé en ce que les motifs (7a) sont constitués par des traits radiaux continus.

6. Récipient conforme à la revendication 5, caractérisé en ce que les traits radiaux (7a) présentent une épaisseur qui croît progressivement de l'extérieur du disque vers le centre de celui-ci.

## Patentansprüche

1. Behälter, hauptsächlich für Küchenzwecke, der durch Tiefziehen einer Metallscheibe (1, 1a) erhalten wird, die auf ihren beiden Seiten mit einer Antihaftbeschichtung (2, 3, 4) überzogen ist, wobei zumindest der Umfangsteil dieser Scheibe, welcher der äußeren Seitenfläche des Behälters entspricht, eine in der Antihaftbeschichtung gebildete Verzierung (6, 6a) trägt, dadurch gekennzeichnet, daß diese Verzierung durch Motive (7, 7a) gebildet ist, die sich gemäß radialen Richtungen der tiefgezogenen Metallplatte erstrecken.

2. Behälter nach Anspruch 1, dadurch gekennzeichnet, daß die Motive (7) voneinander getrennt sind und in radialer Richtung eine deutlich größere Länge aufweisen als ihre Breite.

3. Behälter nach Anspruch 2, dadurch gekennzeichnet, daß die Motive (7) aus unterbrochenen Strichen gebildet sind.

4. Behälter nach einem der Ansprüche 2 oder 3, dadurch gekennzeichnet, daß die in einer gegebenen radialen Richtung gelegenen Motive (7) in bezug auf die in den angrenzenden radialen Richtungen gelegenen Motive versetzt angeordnet sind.

5. Behälter nach Anspruch 1, dadurch gekennzeichnet, daß die Motive (7a) durch radiale durchgezogene Striche gebildet sind.

6. Behälter nach Anspruch 5, dadurch gekennzeichnet, daß die radialen Striche (7a) eine Stärke aufweisen, die vom Äußeren der Scheibe bis hin zu ihrem Zentrum nach und nach anwächst.

**Claims**

1. A container, more particularly for culinary use, produced by pressing a metal disc (1, 1a), the two surfaces of which are coated with a non-stick coating (2, 3, 4), a decoration (6, 6a) formed in the non-stick coating being provided in at least the peripheral part of said disc which corresponds to the outer side surface of the container, characterised in that the said decoration is in the form of motifs (7, 7a) extending in radial directions of the metal disc to be pressed.

2. A container according to claim 1, characterised in that the motifs (7) are separated from one another and their length in the radial direction is very much greater than their width.

3. A container according to claim 2, characterised in that the motifs (7) are in the form of broken lines.

4. A container according to claim 2 or 3, characterised in that the motifs (7) situated in a given radial direction are disposed in staggered relationship to the motifs situated on the adjacent radial directions.

5. A container according to claim 1, characterised in that the motifs (7a) are in the form of continuous radial lines.

6. A container according to claim 5, characterised in that the radial lines (7a) have a thickness with increases progressively from the outside of the disc towards its centre.

FIG_1

FIG_2

FIG_3

FIG_4

7a

1a

7a          7a

## FIG.5

6a

1a

7a          7a

7a

## FIG.6